# EUROPÄISCHE PATENTSCHRIFT

(11) **EP 1 291 591 B1**
(45) Veröffentlichungstag und Bekanntmachung des Hinweises auf die Patenterteilung: **25.03.2009**
(21) Anmeldenummer: 02017558.4
(22) Anmeldetag: 07.08.2002
(51) Int. Cl.: F24J 2/07, F24J 2/28, F24J 2/48

(54) **Solarempfänger**
Solar receiver
Récepteur solaire

(30) Priorität: 06.09.2001 DE 10143613
(43) Veröffentlichungstag der Anmeldung: 12.03.2003
(73) Patentinhaber: Deutsches Zentrum für Luft- und Raumfahrt e.V., 51147 Köln (DE)
(72) Erfinder: Hoffschmidt, Bernhard, Dr.-Ing., 51467 Bergisch Gladbach (DE); Rietbrock, Peter, 51147 Köln (DE); Fend, Thomas, Dr.-Ing., 51143 Köln (DE); Stobbe, Per, 2820 Holte (DK)
(74) Vertreter: Selting, Günther

(56) Entgegenhaltungen:
- CH-A- 669 837
- DE-A- 4 305 668
- DE-A- 19 740 644
- DE-C- 4 223 779
- DE-U- 9 016 385
- FR-A- 2 536 512
- PATENT ABSTRACTS OF JAPAN vol. 018, no. 411 (M-1648), 2. August 1994 (1994-08-02) & JP 06 117705 A (HARUO ARASHI;OTHERS: 01), 28. April 1994 (1994-04-28)

## Beschreibung

Die Erfindung betrifft einen Solarempfänger mit einem luftdurchlässigen Absorberkörper.

Derartige Solarempfänger werden in einem solarthermischen Kraftwerk benutzt, bei dem die einfallende Solarstrahlung von Heliostaten oder Kollektoren auf einen Solarempfänger gebündelt wird, der üblicherweise aus einer Vielzahl von keramischen Absorberkörpern zusammengesetzt ist. Die auf den Absorberkörper auftreffende hochkonzentrierte Solarstrahlung bewirkt eine Aufheizung des Absorberkörpers auf über 1000°C. der Absorberkörper muss demnach aus einer hochtemperaturbeständigen Keramik bestehen, beispielsweise aus Silizium-Carbid oder Silizium-Silizium-Carbid.

Ein Solarempfänger mit einem Absorberkörper, der eine gestufte Porosität hat, ist in DE 197 40 644 A1 beschrieben. Derjenige Bereich des Absorberkörpers, der der einfallenden Strahlung zugewandt ist, hat eine höhere offene Porosität als der zurückliegende Bereich. So werden der einfallenden Solarstrahlung wenig reflektierende Flächen entgegengesetzt und die Solarstrahlung kann tief in den Absorberkörper eindringen, wo sie absorbiert wird. Die höhere Porosität an der Einfallsseite wird dadurch erreicht, dass ein Materialabtrag an dem porösen Absorberkörper vorgenommen wird.

Der Grundaufbau hat die Funktionsweise eines Solarempfängers und ist in DE 197 44 541 A1 beschrieben. Dort sind mehrere Absorberkörper in einer Ebene angeordnet. Hinter jedem Absorberkörper befindet sich eine Mischkammer und von dort führt ein Auslass durch eine Blende hindurch in einen Sammelraum. Die Luft wird in die Strahlungseinfallsseite des porösen Absorberkörpers eingesaugt und durchströmt den Absorberkörper, wobei sich ihre Temperatur erhöht.

Bei Absorberkörpern, die mit sehr hohen Temperaturen von über 1000°C betrieben werden, werden in der Praxis Strömungsinstabilitäten festgestellt. Diese führen im Betrieb unter konzentrierter Strahlung je nach Absorbermaterial zur Zerstörung des Absorberkörpers aufgrund von lokalen Überhitzungen. Bei idealer geometrischer und damit optischer Qualität der Absorberstruktur ist das Auftreten von Strömungsinstabilitäten besonders ausgeprägt. Es besteht der Zusammenhang, dass Absorberstrukturen, die einen hohen Wirkungsgrad versprechen, potentiell eine instabile Durchströmung aufweisen.

Ein Solarempfänger, der im Oberbegriff des Patentanspruchs 1 angegebenen Art ist in DE 43 05 668 C2 beschrieben. Dieser Solarempfänger weist zwei im Wesentlichen gleich starke Faserschichten auf. Die dem Strahlungseinfall zugewandte Faserschicht hat eine geringere Faserdichte als die dahinter angeordnete Faserschicht. Der Hauptteil der Wärmeabsorption soll in der äußeren Faserschicht von geringer Faserdichte erfolgen. Das Fasermaterial hat in beiden Schichten grundsätzlich die gleiche volumenbezogene freiliegende Oberfläche. Es handelt sich um Fasern gleicher Stärke.

Der Erfindung liegt die Aufgabe zugrunde, einen Solarempfänger anzugeben, der gute optische und geometrische Eigenschaften hat und bei dem hohe thermische Wirkungsgrade erreicht werden können.

Die Lösung dieser Aufgabe erfolgt erfindungsgemäß mit den im Patentanspruch 1 angegebenen Merkmalen. Hiernach ist die spezifische freiliegende Oberfläche der Fasern um mindestens den Faktor 10 größer als diejenige des Absorberkörpers. Der hohe Absorptionsgrad der Fasermatte ist auf die große spezifische freiliegende Oberfläche der auf der Strahlungseinfallseite liegenden Fasern zurückzuführen. Diese ergeben eine große Wärmeübertragungsfläche und damit die Möglichkeit, viel Strahlung zu absorbieren. Dies bedeutet gleichzeitig, dass die Fasermatte einen relativen hohen Materialanteil hat, so dass sie durch die einfallende und absorbierte Strahlung weniger hoch aufgeheizt wird als im Falle einer geringen Faserdichte. Erfindungsgemäß wird möglichst viel absorbierendes Material auf die Einfallsseite der Solarstrahlung gebracht. Damit wird eine hohe Absorptionsfähigkeit bei relativ geringer Erwärmung erreicht. Da der Solarempfänger auf der Strahlungseinfallsseite weniger heiß wird als ein Solarempfänger mit geringerer Materialmasse, sind die Abstrahlungsverluste in die Umgebung hinein ebenfalls klein.

Die Fasermatte aus keramischen Fasern hat besonders gute optische Eigenschaften und Wärmeübertragungseigenschaften, so dass sie sich für den Einsatz als Absorber besonders eignet. Der erreichbare thermische Wirkungsgrad bei der Wandlung von solarer Strahlung in Wärme ist bei einer Fasermatte mit feinen Fasern wesentlich höher als bei den bisher verwendeten grob porösen Strukturen. Würde jedoch der gesamte Absorber ausschließlich aus dem Material der Fasermatte bestehen, würde die Struktur sehr starken Strömungsinstabilitäten unterliegen, wobei die Gefahr des Zerstörens des Absorbers besteht. Aufgrund der geringen Elastizität der verwendbaren keramischen Fasern unterliegen diese einer schnellen Zerfaserung der Gewebe oder Matten, da eine Halterung im bestrahlten Bereich schwierig ist.

Erfindungsgemäß wird eine dünne keramische Fasermatte von hoher offener Porosität vor einem Absorberkörper aus weit geringerer offener Porosität und von größerer Stärke gesetzt. Die Kombination aus beiden Strukturen bewirkt, dass der Hauptteil der Strahlung in der Fasermatte und ein weit geringerer Teil in dem nachgeordneten Absorberkörper absorbiert wird. Mit einer derartigen Kombination können die theoretisch erwarteten Wirkungsgrade erreicht werden. Der nachgeordnete grobporöse Absorberkörper dominiert das Durchströmungsverhalten der Kombination und verhindert hierdurch das Auftreten von Strömungsinstabilitäten. Es wird also eine hochporöse keramische Fasermatte vor einen gering porösen Absorberkörper gesetzt, wodurch der wesentliche Teil der Strahlung in der Fasermatte und der Rest in dem hinteren Absorberkörper absorbiert wird. Durch die Kombination der unterschiedlichen Strukturen wird das Auftreten von Strömungsinstabilitäten verhindert. Der nachgeordnete Absorberkörper mit geringerer offener Porosität prägt die Druckverlustcharakteristik der Kombination. Dies bedeutet, dass die Kombination die Druckverlustcharakteristik des gering porösen Materials hat und somit für Strömungsstabilität sorgt.

Die Fasermatte mit hoher offener Porosität hat ein hohes optisches und thermisches Absorptionsvermögen. Durch Windlasten, Verunreinigungen und insbesondere leichte Inhomogenitäten der Fasermatte können jedoch in der Fasermatte unter solarer Einstrahlung lokale Temperaturunterschiede entstehen. Diese führen zu einer ungleichen Verteilung des Kühluft-Massenstroms und somit zu einer Selbstverstärkung. Aufgrund der geringen offenen Porosität des Absorberkörpers ist die absolute Wärmeleitfähigkeit quer zur Durchströmungsrichtung des Absorberkörpers weit größer als im Bereich der Fasermatte. Dies bewirkt, dass lokale Temperaturunterschiede innerhalb des Absorberkörpers abgebaut werden. Hierdurch wird verhindert, dass lokale Temperaturunterschiede in der Fasermatte zu einer Selbstverstärkung führen können, da sich immer ein ausgeglichener Kühlmassenstrom ergibt.

Beide Absorberstrukturen, der Absorberkörper und die Fasermatte, bestehen vorzugsweise aus dem gleichen Material und werden idealer Weise zu einer Verbundstruktur verbunden. Im Falle einer Zerstörung der empfindlichen Fasermatte ermöglicht der stabile hintere Absorberkörper einen weiteren Betrieb des Solarempfängers, allerdings mit verringertem Wirkungsgrad.

Vorzugsweise ist die Stärke (Dicke) des Absorberkörpers größer als 10 mm, insbesondere als größer als 20 mm. Die Stärke der Fasermatte ist kleiner als 5 mm, insbesondere kleiner als 3 mm und speziell kleiner als 2 mm. Die Fasermatte besteht aus Fasern mit einem sehr kleinen Durchmesser von weniger als 20 µm, insbesondere von weniger als 10 µm.

Der Absorberkörper und die Fasermatte bestehen vorzugsweise aus demselben Grundmaterial, beispielsweise als SiC (Silizium-Carbid).

Die offene Porosität des Absorberkörpers ist vorzugsweise kleiner als 70 % und die offene Porosität der Fasermatte ist größer als 80 %.

Die Fasermatte kann an dem Absorberkörper durch Klebung, mechanische Befestigung oder Versinterung befestigt sein.

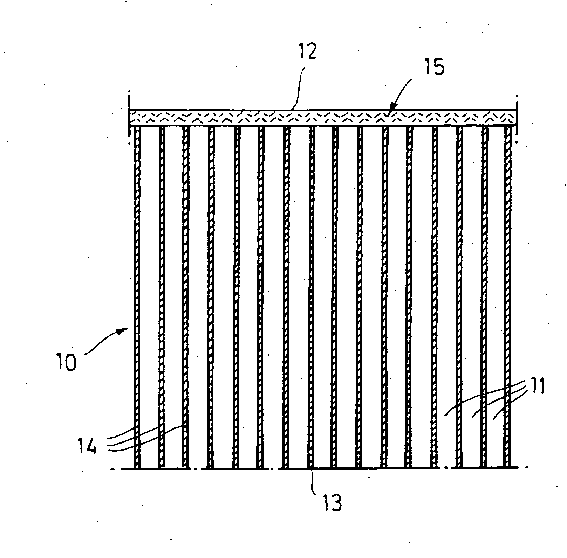

Im folgenden wird unter Bezugnahme auf die einzige Figur der Zeichnung ein Ausführungsbeispiel der Erfindung näher erläutert.

In der Zeichnung ist ein Längsschnitt durch einen Solarempfänger dargestellt.

Der Solarempfänger weist einen Absorberkörper 10 auf, bei dem es sich um einen Parallelkanalmonolithen handelt. Der Absorberkörper 10 weist parallele Kanäle 11 auf, die sich von der Strahlungseinfallseite 12 zur Rückseite 13 erstrecken. Der Absorberkörper besteht aus einem einstückigen Block aus hochtemperaturbeständiger Keramik, insbesondere SiC. Die zahlreichen Kanäle 11 sind durch Wände 14 getrennt. Die Wände 14 haben eine Stärke von 0,8 mm. Die Kanäle 11 können Rundkanäle oder polygonförmige Kanäle sein. Vorzugsweise haben sie sechseckigen oder quadratischen Querschnitt, so dass sie in Frontalansicht eine Wabenstruktur bilden. Die Wände 14 können aus Vollmaterial bestehen, d.h. sie bestehen nicht notwendigerweise aus porösem Material. Die Porosität wird bei dem Parallelkanalmonolithen durch das Verhältnis des Volumens der Kanäle 11 zum Gesamtvolumen definiert. Die Länge der Kanäle 11 ist mindestens 20 mal so groß wie der Durchmesser.

Auf der Strahlungseinfallsseite ist der Absorberkörper mit einer keramischen Fasermatte 15 bedeckt. Die Fasermatte 15 ist ein Faservlies, kann aber auch aus einem einlagigen oder mehrlagigen Gewebe oder Gewirk bestehen. Die Keramikfasern der Fasermatte 15 haben einen mittleren Durchmesser von weniger als 10 µm. Die offene Porosität ist größer als 80 %. Infolge der feinen Keramikfasern und der hohen Porosität ergibt sich eine große spezifische Wärmeübertragungsfläche (freiliegende Oberfläche der Fasern pro Volumeneinheit).

Der größte Teil der auf der Strahlungseinfallsseite 12 einfallenden Strahlung wird in der relativ dünnen Fasermatte 15 absorbiert. Dagegen dominiert der Absorberkörper 10 das Durchströmverhalten. Der Absorberkörper 10 hat gegenüber der Fasermatte 15 einen höheren Strömungswiderstand. Sowohl die Fasermatte 15 als auch der Absorberkörper 10 bewirken eine Absorption der auftreffenden Solarstrahlung, wobei die Fasermatte 15 einen wesentlichen Teil der Solarstrahlung zum Absorberkörper 10 durchlässt.

## Patentansprüche

1. Solarempfänger mit einem luftdurchlässigen Absorberkörper (10), der auf der Einfallsseite (12) der Solarstrahlung mit einer keramischen Fasermatte (15) von höherer offener Porosität als der Absorberkörper (10) bedeckt ist,
**dadurch gekennzeichnet,**
**dass** die Fasermatte (15) eine geringere Stärke hat als der Absorberkörper (10) und dass die volumenbezogene freiliegende Oberfläche der Fasern der Fasermatte (15) um mindestens den Faktor 10 größer ist als die freiliegende Oberfläche der Poren des Absorberkörpers (10).

2. Solarempfänger nach Anspruch 1, **dadurch gekennzeichnet, dass** der Absorberkörper (10) aus einem Parallelkanalmonolithen besteht.

3. Solarempfänger nach Anspruch 1 oder 2, **dadurch gekennzeichnet, dass** die Fasermatte (15) aus Fasern mit einem mittleren Durchmesser von weniger als 20 µm besteht.

4. Solarempfänger nach einem der Ansprüche 1-3, **dadurch gekennzeichnet, dass** die Stärke des Absorberkörpers (10) größer ist als 10 mm und die Stärke der Fasermatte (15) kleiner als 5 mm.

5. Solarempfänger nach einem der Ansprüche 1-4, **dadurch gekennzeichnet, dass** die Stärke des Absorberkörpers (10) mindestens das Zehnfache der Stärke der Fasermatte (15) beträgt.

6. Solarempfänger nach einem der Ansprüche 1-5, **dadurch gekennzeichnet, dass** die offene Porosität des Absorberkörpers (10) kleiner ist als 70 %.

7. Solarempfänger nach einem der Ansprüche 1-6, **dadurch gekennzeichnet, dass** die Fasermatte (15) an dem Absorberkörper (10) durch Klebung, mechanische Befestigung oder Versinterung befestigt ist.

## Claims

1. A solar receiver with an air-permeable absorber body (10) covered on the side (12) of solar radiation incidence with a ceramic fiber mat (15) having a greater open porosity than the absorber body (10),
**characterized in**
**that** the fiber mat (15) has a lesser thickness than the absorber body (10) and that the relative exposed surface of the fibers in the fiber mat (15) is larger by at least the factor 10 than the exposed surface of the pores of the absorber body (10).

2. The solar receiver of claim 1, **characterized in that** the absorber body (10) is formed by a parallel channel monolith.

3. The solar receiver of claim 1 or 2, **characterized in that** the fiber mat (15) is formed from fibers with an average diameter of less than 20 µm.

4. The solar receiver of one of claims 1-3, **characterized in that** the thickness of the absorber body (10) is greater than 10 mm and the thickness of the fiber mat (15) is less than 5 mm.

5. The solar receiver of one of claims 1-4, **characterized in that** the thickness of the absorber body (10) is at least ten times the thickness of the fiber mat (15).

6. The solar receiver of one of claims 1-5, **characterized in that** the open porosity of the absorber body (10) is less than 70%.

7. The solar receiver of one of claims 1-6, **characterized in that** the fiber mat (15) is attached to the absorber body (10) by adhesion, mechanical fastening or sintering.

## Revendications

1. Récepteur solaire comprenant un corps absorbeur (10) perméable à l'air, dont la face d'incidence du rayonnement solaire (12) est recouverte d'une natte de fibres céramiques (15) dont la porosité ouverte est supérieure à celle du corps absorbeur (10),
**caractérisé en ce**
**que** la natte de fibres (15) est d'une épaisseur inférieure à celle du corps absorbeur (10) et que la surface exposée spécifique des fibres de la natte de fibres (15) dépasse, par au moins le facteur 10, la surface exposée des pores du corps absorbeur (10).

2. Récepteur solaire selon la revendication 1, **caractérisé en ce que** le corps absorbeur (10) est formé d'un monolithe à canaux parallèles.

3. Récepteur solaire selon la revendication 1 ou 2, **caractérisé en ce que** la natte de fibres (15) est formée par des fibres ayant un diamètre moyen inférieur à 20 µm.

4. Récepteur solaire selon une des revendications 1-3, **caractérisé en ce que** l'épaisseur du corps absorbeur (10) dépasse 10 mm et que l'épaisseur de la natte de fibres (15) est inférieure à 5 mm.

5. Récepteur solaire selon une des revendications 1-4, **caractérisé en ce que** l'épaisseur du corps absorbeur (10) est au moins dix fois l'épaisseur de la natte de fibres (15).

6. Récepteur solaire selon une des revendications 1-5, **caractérisé en ce que** la porosité ouverte du corps absorbeur (10) est inférieure à 70%.

7. Récepteur solaire selon une des revendications 1-6, **caractérisé en ce que** la natte de fibres (15) est attachée au corps absorbeur (10) par adhésion, fixation mécanique ou vitrification.
